# EUROPÄISCHE PATENTANMELDUNG

(11) **EP 3 132 695 A1**
(43) Veröffentlichungstag der Anmeldung: **22.02.2017**
(21) Anmeldenummer: 15168048.5
(22) Anmeldetag: 18.05.2015
(51) Int. Cl.: A23P 30/20, A23C 9/137, A23C 19/068, A23C 19/09

(54) **FESTE PROTEINZUBEREITUNGEN**

(71) Anmelder: DMK Deutsches Milchkontor GmbH, 27404 Zeven (DE)
(72) Erfinder: May, Martin, 32694 Dörentrup (DE)
(74) Vertreter: Fabry, Bernd

(57) **Zusammenfassung**

Vorgeschlagen wird eine feste Proteinzubereitung, die dadurch erhältlich ist, dass man
(a) Proteine aus natürlichen Quellen in einen Schneckenextruder einspeist,
(b) der Masse während des Extrusionsvorgangs ein Denaturierungsmittel zusetzt, und
(c) die extrudierte und denaturierte Masse nach Verlassen des Extruders ausformt.

Die Zubereitung dient als kostengünstiger Käseersatzstoff.

## Beschreibung

### GEBIET DER ERFINDUNG

Die Erfindung befindet sich auf dem Gebiet der Milchprodukte und betrifft feste Proteinmassen mit Käsetextur, die schnell und kostengünstig hergestellt werden und als Käseersatz dienen können.

### STAND DER TECHNIK

Der erste Käseersatzstoff wurde bereits Ende des 19. Jahrhunderts in den USA entwickelt und auch bald in Europa produziert. Zur Herstellung wurde durch Zentrifugieren gewonnene Magermilch mit flüssigem Rindertalg (Oleomargarin) vermischt und mit Lab dickgelegt. Dieses Produkt war durch den Ersatz des Milchfetts durch den preiswerteren Rindertalg deutlich billiger als Käse. Gängige Bezeichnungen neben Kunstkäse waren Schmalzkäse, Oleomargarinekäse oder Margarinkäse. Mit dem Aufkommen des Veganismus als Ernährungsform, die komplett auf tierische Produkte verzichtet, entstand seit 2010 eine immer größere Nachfrage und somit ein Markt für veganen Käse, die die Eigenschaften von echtem Käse wie Geschmack und Proteingehalt ohne tierische Zutaten nachahmen. Für heutige Käseersatzstoffe dienen meist Wasser, Milch-, Soja- oder Bakterieneiweiß und Pflanzenöle wie Palmöl als Grundstoffe, teils auch Stärke. Weitere Zutaten sind Emulgatoren, Aroma- und Farbstoffe, Salz und Geschmacksverstärker, um Geschmack und Aussehen an Vorbildwie Parmesan, Emmentaler, Mozzarella, Feta oder Camembert anzunähern. Da kein Reifungsprozess notwendig ist, ist die Produktionsdauer gegenüber echtem Käse stark verkürzt. Zur Herstellung wird Pflanzenfett erwärmt, mit einer vorgefertigten Trockenmischung und Wasser vermischt, erhitzt, dann wird Aromakonzentrat eingerührt und alles verpackt und gekühlt.

Gründe für den Einsatz von Käseersatzstoffen sind der erheblich geringere Herstellungspreis gegenüber Käse und die durch die Zusammensetzung der Zutaten einstellbaren Eigenschaften wie Schmelzverhalten und Hitzebeständigkeit (bis zu 400 °C), die die Produktion und Weiterverarbeitung erleichtern. Je nach Ausgangsstoff sind entsprechende Zubereitungen nicht nur für Menschen mit veganer Lebenseinstellung interessant, sondern auch für Käseliebhaber mit Laktoseintoleranz.

Käseersatzstoffe werden in Westeuropa und den USA vorwiegend in der Gastronomie und in Bäckereien verwendet, z. B. für Pizza, Lasagne oder Käsebrötchen, seltener in der Lebensmittelindustrie bei Convenience-Produkten für Endverbraucher. Allein in Deutschland liegt die Produktionsmenge bei über 100.000 Tonnen pro Jahr. In Osteuropa und in südlichen Ländern sind Käseersatzstoffe auch häufig in verpackten Fertiggerichten zu finden.

Aus dem Stand der Technik sind bereits Verfahren zur Herstellung unterschiedlicher Käseersatzstoffe bekannt. Stellvertretend seien hier genannt:

Gegenstand der CA 1169698 A1 (NESTLE) ist ein Verfahren zur Herstellung von pasteurisiertem Käse in Pulverform, bei dem man eine kolloidale Milchsäurelösung mit einem hohen Protein/Lactose und Protein/Calcium Verhältnis (mindestens doppelt so hohe wie Rohmilch) sowie einem pH-Wert von 5.0 bis 5.5 zu verarbeitet, die erhaltene Lösung alkalisch einstellt, pasteurisiert und nach erneutem Ansäuern trocknet. Alternativ ist es möglich, die Rohmilch zuerst anzusäuern und dann nach Ultrafiltration, Alkalisierung und Ansäuerung zu einem zu trocknen. Das hergestellte Pulver kann mit Wasser rekonstruiert und dann in ein Mozzarella-ähnelndes Produkt umgewandelt werden. Somit entspricht auch hier die Textur nicht der von Schnittkäse.

Die EP 1825758 A2 (KRAFT) beschäftigt sich mit einem Verfahren zur Herstellung eines Käseproduktes, wobei eine Mischung aus hochwertigem Proteinpulver, Milchpulver und Salz mit Wasser und anderen alternativen Zusatzstoffen gemischt wird, das so erhaltene Zwischenprodukt mit Wasser, Fettstoffen, anderen Milcherzeugnissen und geeigneten versetzt und bei einer Temperatur von 65 bis 121 °C gekocht wird. Die Textur wird zwar als glatt bezeichnet, entspricht jedoch der von Weichkäse.

Nachteilig ist dass es an Käseersatzstoffen und entsprechenden herstellverfahren fehlt, die auf Basis unterschiedlicher Proteinquellen flexibel, schnell und kostengünstig her-stellbar sind, einen hohen Nährwert aufweisen, besondere Lagerstabilität besitzen und insbesondere eine Textur aufweisen, die dem von gängigen Schnittkäsen entspricht.

Die Aufgabe der vorliegenden Erfindung hat daher darin bestanden, auf Basis von natürlichen Proteinquellen, vorzugsweise Überschussproteinquellen schnell, kostengünstig und kontinuierlich einen hochwertigen Käseersatzstoff zur Verfügung zu stellen, der sich hinsichtlich Nährstoffgehaltes und Textur nicht von handelsüblichen Käsesorten wie Gouda, Emmentaler oder Maasdammer, also typischen Schnittkäsen unterscheidet.

### BESCHREIBUNG DER ERFINDUNG

Ein erster Gegenstand der Erfindung betrifft daher eine feste Proteinzubereitung, die dadurch erhältlich ist, dass man
(a) Proteine aus natürlichen Quellen in einen Schneckenextruder einspeist,
(b) der Masse während des Extrusionsvorgangs ein Denaturierungsmittel zusetzt, und
(c) die extrudierte und denaturierte Masse nach Verlassen des Extruders ausformt.

Ein weiterer Gegenstand der Erfindung betrifft ein analoges, vorzugsweise kontinuierliches Verfahren zur Herstellung einer festen Proteinzubereitung, bei dem man
(a) Proteine aus natürlichen Quellen in einen Schneckenextruder einspeist,
(b) der Masse während des Extrusionsvorgangs ein Denaturierungsmittel zusetzt, und
(c) die extrudierte und denaturierte Masse nach Verlassen des Extruders ausformt.

Überraschenderweise wurde gefunden, dass sich unterschiedliche Proteinquellen, nämlich sowohl pflanzliche als auch tierische in einem Extruder unter Einsatz von Säuerungsmitteln oder Lab mit hohem Durchsatz in eine Zubereitung umwandeln lassen, die in ihrer Textur Schnittkäse entspricht. Durch Zugabe von Aromen, Geschmacksverstärker, Gewürzen, Salzen, Farbstoffen und dergleichen lassen sich spezielle natürliche Käsesorten beinahe identisch nachstellen. Durch Verzicht auf tierische Proteine bzw. durch Einsatz von Proteinquellen, die keine Lactose mehr enthalten, lassen sich Zubereitungen herstellen, die speziell auch für Veganer und Menschen mit Laktoseintoleranz geeignet sind.

**PROTEINQUELLEN**

Als natürliche Proteinquellen kommen im Sinne der Erfindung Pflanzenproteine und/oder tierische Proteine, speziell Milchproteine sowie deren Gemischen in Frage. Beispiele für geeignete pflanzliche Proteine sind Weizenproteine, Erbsenproteine oder Kartoffelproteinen. Als tierische Proteine kommen vor allem Milchproteine und/oder Molkenproteine in Betracht, die auch als entsprechende Konzentrate pulverförmig im Handel sind.

Vorzugsweise werden die Proteine mit einer Trockenmasse im Bereich von etwa 15 bis etwa 60 Gew.-% und insbesondere etwa 20 bis etwa 50 Gew.-% und bevorzugt etwa 30 bis etwa 45 Gew.-% eingesetzt.

Es können zudem Proteinfraktionen eingesetzt werden, die als weitere Bestandteile Casein und/oder Lactose enthalten.

### EXTRUSION

Das erfindungsgemäße Verfahren wird in einem Extruder durchgeführt. Hierunter versteht man Fördergeräte, die nach dem Funktionsprinzip des Schneckenförderers feste bis dickflüssige Massen unter hohem Druck und hoher Temperatur gleichmäßig aus einer formgebenden Öffnung herauspressen. Dieses Verfahren wird als Extrusion bezeichnet.

Grundsätzlich können Extruder in zwei Prozessprinzipien unterteilt werden: Verarbeitungs- und Aufbereitungsextruder. Verarbeitungsextruder dienen hauptsächlich der Formgebung (In der Regel Einwellenextruder), während Aufbereitungsextruder der chemischen und/oder physikalischen Modifizierung (reagieren, mischen, entgasen etc.) von Stoffen dienen (gleichlaufender dichtkämmender Doppelwellenextruder, Busskneter etc.).

Geeignet sind Extruder mit einer, zwei oder mehreren Schneckenwellen. Bei den Extrudern mit zwei Schnecken unterscheidet man den gleichläufigen und den gegenläufigen Doppelschneckenextruder. Beim gleichläufigen Doppelschneckenextruder rotieren die Schnecken in gleicher Drehrichtung, beim gegenläufigen in entgegengesetzter Drehrichtung. Die Förderung und der Druckaufbau werden beim Einschnecken- und gleichläufigen Doppelschneckenextruder durch die Friktion der mit der Schnecke rotierenden Masse an der stehenden Gehäusewand (Zylinder) bewirkt - man spricht in diesem Zusammenhang von Friktionsförderung. Die so in der Rotation zurückbleibende Masse wird von den wendelförmigen Schneckengängen zur Auslassdüse geschoben. Beim gegenläufigen Doppelschneckenextruder überwiegt das Prinzip der Zwangsförderung. Im Sinne der Erfindung sind Doppelschneckenextruder bevorzugt. Im Sinne der Erfindung kommen 25D, 30D, 40D und dergleichen in Frage, was heißt, dass das 25-fache (30-fache, 40-fache etc.) des Schneckendurchmessers die Länge ergibt. Zur Ausstoßsteigerung können auch Einschneckenextruder, so genannte Schnellläufer, mit Drehzahlen von bis zu 1500 Umdrehungen pro Minute eingesetzt werden.

Erfindungsgemäß wird die Extrusion bei einer Temperatur im Bereich von etwa 50 bis etwa 95 °C - bezogen auf die Manteltemperatur des Extruders - durchgeführt. Der Druck kann dabei etwa 1 bis etwa 300 bar betragen. Vorzugsweise wird die Extrusion mit einem Durchsatz von etwa 200 bis etwa 7000 kg/h durchgeführt.

### DENATURIERUNGSMITTEL

Zur Umwandlung der Proteine in einen Käseersatzstoff bedarf es eines Denaturierungsvorgangs, der unter den erfindungsgemäßen Bedingungen, insbesondere den Temperatur-und Druckbedingungen, schnell und vollständig erfolgt. Dazu wird der Masse in einer ersten Ausführungsform eine Lebensmittelsäurequelle zugesetzt. Grundsätzlich ist es zwar möglich, diese Quelle schon der Proteinmasse zuzufügen, es erweist sich jedoch als einfacher, die Quelle separat in den Extruder einzuspeisen, entweder über einen Einlass am Beginn der Extrusionsstrecke oder über mehrere Einlassventile, die über die Extrusionsstrecke verteilt sind. Die Menge an Denaturierungsmittel liegt typisch bei etwa 0,5 bis etwa 4 Gew.-% und insbesondere bei etwa 1 bis etwa 2 Gew.-% -jeweils bezogen auf die Proteinmasse.

Als Säurequellen kommen Lebensmittelsäuren in Betracht, als da sind:
- E 260: - Essigsäure
- E 270: - Milchsäure
- E 290: - Kohlendioxid
- E 296: - Apfelsäure
- E 297: - Fumarsäure
- E 330: - Citronensäure
- E 331: - Natriumcitrat
- E 332: - Kaliumcitrat
- E 333: - Calciumcitrat
- E 334: - Weinsäure
- E 335: - Natriumtartrat
- E 336: - Kaliumtartrat
- E 337: - Natrium-Kaliumtartrat
- E 338: - Phosphorsäure
- E 353: - Metaweinsäure
- E 354: - Calciumtartrat
- E 355: - Adipinsäure
- E 363: - Bernsteinsäure
- E 380: - Triammoniumcitrat
- E 513: - Schwefelsäure
- E 574: - Gluconsäure
- E 575: - Glucono-delta-Lacton

Bevorzugte Säuerungsmittel sind Zitronensäure, Milchsäure und insbesondere Glucon-delta-Lacton sowie deren Gemischen. Das Lacton eignet sich für das erfindungsgemäße Verfahren ganz besonders, weil es über den gesamten Extrusionsvorgang die Säure kontinuierlich freisetzt, was zu einem besonders homogenen Produkt führt.

Alternativ kann man der Masse während der Extrusion als Denaturierungsmittel auch Lab, also ein natürliches Gemisch aus den Enzymen Chymosin und Pepsin, zusetzen.

### HILFS- UND ZUSATZSTOFFE

In einer weiteren Ausführungsform der vorliegenden Erfindung ist vorgesehen, der Masse während der Extrusion weitere Hilfs- und Zusatzstoffe, wie zum Beispiel Starterkulturen, Probiotische Mikroorganismen, Prebiotische Stoffe, Emulgatoren, Verdickungsmittel, Aromastoffe, Geschmacksverstärker, Salze (speziell Kochsalz), Kräuter, Vitamine, Antioxidantien, Lebensmittelfarbstoffe und dergleichen in Mengen von beispielsweise etwa 0,1 bis etwa 10 Gew.-%, vorzugsweise etwa 0,5 bis etwa 8 Gew.-%, insbesondere etwa 1 bis etwa 5 Gew.-% und besonders bevorzugt etwa 2 bis etwa 3 Gew.-% zuzusetzen.

### Starterkulturen und Probiotische Mikroorganismen

Probiotische Mikroorganismen, auch als "Probiotics" bezeichnet, die die Gruppe (N) bilden, stellen lebende Mikroorganismen dar, die für den Wirt nützliche Eigenschaften besitzen. Gemäß der Definition der FAO/WHO handelt es sich um "lebende Mikroorganismen, die bei angemessener Dosierung dem Wirt einen Gesundheitsvorteil vermitteln". Milchsäurebakterien (LAB) und Bifidobakterien stellen die bekanntesten Probiotics dar; es können aber auch verschiedene Hefen und Bazillen Verwendung finden. Probiotics werden üblicherweise als Bestandteil von fermentierten Nahrungsmitteln aufgenommen, denen man spezielle Lebendkulturen zugesetzt hat, wie z.B. Joghurt, Sojajoghurt oder andere probiotische Nahrungsmittel. Darüber hinaus sind auch Tabletten, kapseln, Pulver und Sachets erhältlich, die die Mikroorganismen in gefriergetrockneter Form enthalten. Tabelle B gibt einen Überblick über handelsübliche Probiotics und den zugehörigen Auslobungen zur Gesundheit, die im Sinne der vorliegenden Erfindung als Komponente (b1) eingesetzt werden können.

**Tabelle A:**

| Probiotische Stoffe | | | |
|---|---|---|---|
| **Stamm** | **Bezeichnung** | **Hersteller** | **Auslobung** |
| *Bacillus coagulans* GBI-30,6086 | GanedenBC | Ganeden Biotech | Steigert die Immunantwort bei viraler Infektion |
| *Bifidobacterium animal-*is subsp. *lactis* BB-12 | Probio-Tec Bifidobacterium BB-12 | Chr. Hansen | Klinische Studien am Menschen haben gezeigt, dass BB-12 alleine oder in Kombination das gastrotestinale System positiv beeinflusst. |
| *Bifidobacterium infan-tis* 35624 | Align | Procter & Gamble | In einer vorläufigen Studie wurde gezeigt, dass das Bakterium abdominale Schmerzen verringern kann. |
| *Lactobacillus acidophi-lus* NCFM | | Danisco | Aus einer Studie geht hervor, dass die Nebeneffekte von antibiotischen Behandlungen verringert werden |
| *Lactobacillus paraca-sei* St11 (or NCC2461) | | | |
| *Lactobacillus johnsonii* La1 (= Lactobacillus LC1, *Lactobacillus johnsonii* NCC533) | | Nestlé | Verringert Gastritisbeschwerden und vemindert Entzündungen |
| *Lactobacillus planta-rum* 299v | GoodBelly/ Pro-Viva/ProbiMage | Probi | Könnte IBS Symptome verbessern; jedoch noch mehr Studien erforderlich. |
| *Lactobacillus reuteri* American Type Culture Collection \|ATTC 55730 *(Lactobacillus reuteri* SD2112) | | BioGaia | Erste Anzeichen für eine Wirksamkeit gegen Gangivitis, Fieber bei Kindern und Verminderung der Krankheitstage bei Erwachsenen. |
| *Lactobacillus reuteri* Protectis (DSM 17938, daughter strain of ATCC 55730) | | | |
| *Lactobacillus reuteri* Protectis (DSM 17938, daughter strain of ATCC 55730) | | | |
| *Saccharomyces boular-dii* | DiarSafe and others | Wren Laboratories | Beschränkter Nachweis bei der Behandlung von akuten Durchfallerkrankungen. |
| *Lactobacillus rhamnosus* GR-1 & *Lactobacillus reuteri* RC-14 | Bion Flore In-time/ Jarrow Fem-Dophilus | Chr. Hansen | In einer Studie Nachweis der Wirksamkeit gegen Vaginitis. |
| *Lactobacillus acidophi-lus* NCFM *& Bifidobacterium bifidum* BB-12 | Florajen3 | American Lifeline, Inc | Erste Hinweise auf Wirksamkeit gegen CDAD |
| *Lactobacillus acidophi-lus* CL1285 *& Lactobacillus ca-sei* LBC80R | Bio-K+ CL1285 | Bio-K+ International | Hinweise auf Verbesserung bei der Verdauung, speziell im Hinblick auf Lactoseintoleranz. |
| *Lactobacillus planta-rum* HEAL 9 *& Lactobacillus paraca-sei* 8700:2 | Bravo Friscus/ ProbiFrisk | Probi | Derzeit laufen Untersuchungen zur Wirksamkeit gegen Erkältungs-erkrankungen. |

Im Folgenden werden zwei weiteren Formen von Milchsäurebakterien genannt, die ebenfalls als Starterkulturen bzw. als Probiotics eingesetzt werden können:
- *Lactobacillus bulgaricus;*
- *Streptococcus thermophilus;*
- *Streptococcus thermophilus,*
- *Leuconostoc species,*
- *Lactococcus lactis subsp. lactis biovar diacetylactis,*
- *Lactococcus lactis subsp. lactis,*
- *Lactococcus lactis subsp. cremoris,* und
- *Bifido bakterium lactis B12,*

### Prebiotische Stoffe

In einer weiteren Ausgestaltung der Erfindung können die Zubereitungen des Weiteren Prebiotische Stoffe ("Prebiotics") enthalten, die die Gruppe H bilden. Prebiotics werden als unverdauliche Nahrungsbestandteile definiert, deren Verabreichung das Wachstum oder die Aktivität einer Reihe nützlicher Bakterien im Dickdarm stimuliert. Die Zugabe von prebiotischen Verbindungen verbessert die Stabilität der Anthocyanine gegenüber Abbauprozessen im Darmtrakt. Im Folgenden werden verschiedene Stoffe, insbesondere Kohlenhydrate, die als Prebiotics im Sinne der Erfindung besonders bevorzugt sind.

**Fructooligosaccharide.** Fructooligosaccharide oder abgekürzt FOS umfassen insbesondere kurzkettige Vertreter mit 3 bis 5 Kohlenstoffatomen, wie beispielsweise D-Fructose und D-Glucose. FOS, auch als Neozucker bezeichnet, werden kommerziell auf Basis von Saccharose und dem aus Pilzen gewonnenen Enzym Fructosyltransferase hergestellt. FOS unterstützen insbesondere das Wachstum von Bifidobakterien im Darm und werden vor allem in den USA zusammen mit probiotischen Bakterien in verschiedenen funktionalisierten Lebensmitteln vermarktet.

**Inuline.** Inuline zählen zu einer Gruppe von natürlich vorkommenden Fructose enthaltenden Oligosachhariden. Sie gehören zu einer Klasse von Kohlenhydraten, die als Fructane bezeichnet werden. Ihre Gewinnung erfolgt aus den Wurzeln der Chicoree-Pflanze (Cichorium intybus) oder so genannten Jerusalem-Artischocken. Inuline bestehen überwiegend aus Fructoseeinheiten und weisen typisch eine Glucoseeinheit als Endgruppe auf. Die Fructoseeinheiten sind dabei miteinander über eine beta-(2-1)glykosidische Bindung verknüpft. Der mittlere Polymerisationsgrad von Inulinen, die als Prebiotics im nahrungsmittelbereich Anwendung finden, liegt bei 10 bis 12. Inuline stimulieren ebenfalls das Wachstum von Bifidobakterien im Dickdarm.

**Isomaltooligosaccharide.** Bei dieser Gruppe handelt es sich um eine Mischung von alpha-D-verknüpften Glucoseoligomeren, einschließlich Isomaltose, Panose, isomaltotetraose, Isomaltopentaose, Nigerose, Kojibiose, Isopanose und höherer verzweigter Oligosaccharide. Isomaltooligosaccharide werden über verschiedene enzymatische Wege hergestellt. Sie stimulieren ebenfalls das Wachstum von Bifidobakterien und Lactobacillen im Dickdarm. Isomaltooligosaccharide werden speziell in Japan als Nahrungsmittelzusatzstoffe in funktionalisierten Lebensmitteln eingesetzt. Inzwischen finden sie auch in den USA Verbreitung.

**Lactilol.** Lactilol ist das Disaccharid der Lactulose. Seine medizinische Anwendung findet gegen Verstopfung und bei häpatischer Enzephalopathie. In Japan wird Lactilol als prebiotic eingesetzt. Es widersteht dem Abbau im oberen Verdauungstrakt, wird aber durch verschiedene Darmbakterien fermentiert, was zu einem Anstieg der Biomasse an Bifidobakterien und Lactobacillen im Darm führt. Lactilol ist auch unter der chemischen Bezeichnung 4-0-(beta-D-galactopyranosyl)-D-glucitol bekannt. Der medizinsche Anwendungsbereich von Lactilol in den USA ist wegen fehlender Studien beschränkt; in Europa wird es vorzugsweise als Süßstoff eingesetzt.

**Lactosucrose.** Lactosucrose ist ein Trisaccharid, das sich aus D-Galactose, D-Glucose und D-Fructose aufbaut. Lactosucrose wird durch enzymatischen Transfer des Galactosylrestes in der Lactose auf die Sucrose hergestellt. Es wird weder im Magen noch im oberen Teil des Darmtraktes abgebaut und wird ausschließlich von Bifidobakterien zu Wachstum konsumiert. Unter physiologischen Gesichtspunkten wirkt Lactosucrose als Stimulator für das Wachstum der Darmflora. Lactosucrose ist ebenfalls bekannt als 4G-beta-D-galactosucrose. Es ist in Japan als Nahrungsmittelzusatzstoff und als Bestandteil von funktionalisierten lebensmittel weit verbreitet, insbesondere auch als Zusatzstoff für Joghurts. Lactosucrose wird derzeit auch in den USA für einen ähnlichen Anwendungszweck getestet.

**Lactulose.** Lactulose ist ein halbsynthetisches Disaccharid aus D-Lactose und D-Fructose. Die Zucker sind über eine beta-glykosidische Bindung verknüpft, was sie resistent gegen Hydrolyse durch Verdauungsenzyme macht. Stattdessen wird Lactulose durch eine beschränkte Anzahl von Darmbakterien fermentiert, was zu einem Wachstum insbesondere von Lactobacillen und Bifidobakterien führt. Lactulose stellt in den USA ein verschreibungspflichtiges Medikament gegen Verstopfung und hepatische Enzephalopathie dar. In Japan hingegen wird es als Nahrungsmittelzusatzstoff und Bestandteil von funktionalisierten Lebensmitteln frei verkauft.

**Pyrodextrine.** Pyrodextrine umfassen eine Mischung von glucoseenthaltenden Oligosacchariden, die bei der Hydrolyse von Stärke gebildet werden. Pyrodextrine fördern die Proliferation von Bifidobakterien im Dickdarm. Auch sie werden im oberen Darmbereich nicht abgebaut.

**Sojaoligosaccharide.** Bei dieser Gruppe handelt es sich um Oligosaccharide, die im Wesentlichen nur in Sojabohnen und darüber noch in anderen Bohnen sowie Erbsen zu finden sind. Die beiden maßgeblichen Vertreter sind das Trisaccharid Raffinose und das Tetrasaccharid Stachyose. Raffinose setzt sich aus jeweils einem Molekül D-Galactose, D-Glucose und D-Fructose zusammen. Stachyose besteht aus zwei Molekülen D-Galactose sowie jeweils einem Molekül D-Glucose und D-Fructose. Sojaoligosacccharide stimulieren das Wachstum von Bifidobakterien im Dickdarm und werden in Japan bereits als Nahrungsmittelzusatzstoffe sowie in funktionalisierten Lebensmitteln eingesetzt. In den USA werden sie für diese Anwendung derzeit getestet.

**Transgalactooligosaccharide.** Transgalactooligosaccharide (TOS) stellen Mischungen von Oligosacchariden auf Basis D-Glucose und D-Galactose dar. TOS werden ausgehend von D-Lactose mit Hilfe des Enzyms Betaglucosidase aus Aspergillus oryzae hergestellt. Wie viele andere Prebiotics sind auch TOS im Dünndarm stabil und stimulieren das Wachstum von Bifidobakterien im Dickdarm. TOS werden sowohl bereits in Europa als auch in Japan als Nahrungsmittelzusatzstoffe vermarktet.

**Xylooligosaccharide.** Xylooligosaccharide enthalten beta-1,4-verknüpfte Xyloseeinheiten. Der Polymerisationsgrad der Xylooligosaccharide liegt zwischen 2 und 4. Sie werden durch enzymatische Hydrolyse des Polysaccharids Xylan erhalten. Sie werden bereits in Japan als Nahrungsmittelzusatzstoffe vermarktet, in den USA befinden sie sich noch in der Testphase.

**Biopolymere.** Geeignete Biopolymere, die ebenfalls als Prebiotics in Betracht kommen, wie beispielsweise Beta-Glucane, zeichnen sich dadurch aus, dass sie auf pflanzlicher Basis hergestellt werden, beispielsweise kommen als Rohstoffquellen Cerealien wie Hafer und Gerste, aber auch Pilze, Hefen und Bakterien in Frage. Außerdem geeignet sind mikrobiell hergestellte Zellwandsuspensionen oder ganze Zellen mit hohem Beta-Glucan Gehalt. Restliche Anteile an Monomeren weisen 1-3 und 1-4 oder 1-3 und 1-6 Verknüpfungen auf, wobei der Gehalt stark variieren kann. Vorzugsweise werden Beta-Glucane auf Basis von Hefen, insbesondere Saccharomyces, speziell Saccharomyces cerevisiae, erhalten. Andere geeignete Biopolymere sind Chitin und Chitinderivate, insbesondere Oligoglucosamin und Chitosan, das ein typisches Hydrokolloid darstellt.

**Galactooligosaccharide (GOS).** Galacto-Oligosaccharide werden durch die enzymatische Umwandlung von Lactose, einer Komponente von Rindermilch, erzeugt. GOS umfassen im Allgemeinen eine Kette von Galactose-Einheiten, die durch aufeinanderfolgende Transgalactosylierung-Reaktionen gebildet werden, und die eine terminale Glucoseeinheit aufweisen. Terminale Glucoseeinheiten werden zumeist durch eine frühzeitige Hydrolyse von GOS gebildet. Der Polymerisationsgrad der GOS kann ziemlich stark schwanken und reicht von 2 bis 8 Monomereinheiten. Eine Reihe von Faktoren bestimmt dabei den Aufbau und die Reihenfolge Monomereinheiten: die Enzym-Quelle, das Ausgangsmaterial (Lactose-Konzentration und Ursprung der Lactose), die am Prozess beteiligten Enzyme, Bedingungen bei der Verarbeitung und die Zusammensetzung des Mediums.

### Emulgatoren

Emulgatoren zeichnen sich durch die wichtige Eigenschaft aus, sowohl in Wasser als auch in Fett löslich zu sein. Emulgatoren bestehen meist aus einem fettlöslichen und einem wasserlöslichen Teil. Sie kommen immer dann zum Einsatz, wenn Wasser und Öl zu einer beständigen, homogenen Vermischung gebracht werden sollen.

Geeignete Emulgatoren, die in der lebensmittelverarbeitenden Industrie verwendet werden sind ausgewählt aus: Ascorbylpalmitat (E 304) Lezithin (E 322) Phosphorsäure (E 338) Natriumphosphat (E 339) Kaliumphosphat (E 340) Kalziumphosphat (E 341) Magnesiumorthophosphat (E 343) Propylenglykolalginat (E 405) Polyoxyethylen(8)stearat (E 430) Polyoxyethylenstearat (E 431) Ammoniumphosphatide (E 442) Natriumphosphat und Kaliumphosphat (E 450) Natriumsalze der Speisefettsäuren (E 470 a) Mono- und Diglyceride von Speisefettsäuren (E 471) Essigsäuremonoglyceride (E 472 a) Milchsäuremonoglyceride (E 472 b) Zitronensäuremonoglyceride (E 472 c) Weinsäuremonoglyceride (E 472 d) Diacetylweinsäuremonoglyceride (E 472 e) Zuckerester von Speisefettsäuren (E 473) Zuckerglyceride (E 474) Polyglyceride von Speisefettsäuren (E 475) Polyglycerin-Polyricinoleat (E 476) Propylenglykolester von Speisefettsäuren (E 477) Natriumstearoyllaktylat (E 481) Calciumstearoyl-2-lactylat (E 482) Stearyltartrat (E 483) Sorbitanmonostearat (E 491) Stearinsäure (E 570).

### Verdickungsmittel

Verdickungsmittel sind Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Bei den meisten Verdickungsmitteln handelt es sich um lineare oder verzweigte Makromoleküle (z. B. Polysaccharide oder Proteine), die durch intermolekulare Wechselwirkungen, wie Wasserstoffbrücken, hydrophobe Wechselwirkungen oder lonenbeziehungen miteinander interagieren können. Extremfälle von Dickungsmitteln sind Schichtsilikate (Bentonite, Hectorite) oder hydratisierte SiO₂-Partikel, die als Teilchen dispergiert vorliegen und in ihrer festkörperartigen Struktur Wasser binden können bzw. aufgrund der beschriebenen Wechselwirkungen miteinander interagieren können. Beispiele sind:
- E 400: - Alginsäure
- E 401: - Natriumalginat
- E 402: - Kaliumalginat
- E 403: - Ammoniumalginat
- E 404: - Calciumalginat
- E 405: - Propylenglycolalginat
- E 406: - Agar Agar
- E 407: - Carrgeen, Furcelleran
- E 407: - Johannisbrotkernmehl
- E 412: - Guarkernmehl
- E 413: - Traganth
- E 414: - Gummi arabicum
- E 415: - Xanthan
- E 416: - Karaya (Indischer Traganth)
- E 417: - Tarakernmehl (Peruanisches Johannisbrotkernmehl)
- E 418: - Gellan
- E 440: - Pektin, Opekta
- E 440ii: - Amidiertes Pektin
- E 460: - Mikrokristalline Cellulose, Cellulosepulver
- E 461: - Methylcellulose
- E 462: - Ethylcellulose
- E 463: - Hydroxypropylcellulose
- E 465: - Methylethylcellulose
- E 466: - Carboxymethylcellulose, Natriumcarboxymethylcellulose

### Vitamine

In einer weiteren Ausführungsform der vorliegenden Erfindung können die Nahrungsmittelzusatzstoffe als weitere fakultative Gruppe von Zusatzstoffen Vitamine enthalten. Vitamine verfügen über unterschiedlichste biochemische Wirkungsweisen. Einige wirken ähnlich wie Hormone und regulieren den Mineralmetabolismus (z.B. Vitamin D), oder wirken auf das Wachstum von Zellen und Gewebe sowie die Zelldifferenzierung (z.B. einige Formen des Vitamin A). Andere stellen Antioxidantien dar (z.B. Vitamin E und unter bestimmten Umständen auch Vitamin C). Die größte Zahl von Vitaminen (z.B. die B-Vitamine) stellen Vorstufen für enzymatische Co-Faktoren dar, die Enzyme dabei unterstützen, bestimmte Prozesse im Metabolismus zu katalysieren. In diesem Zusammenhang können Vitamin mitunter eng an die Enzyme gebunden sein, beispielsweise als Teil der prostetischen Gruppe: ein Beispiel hierfür ist Biotin, das ein Teil des Enzyms ist, welches für den Aufbau von Fettsäuren verantwortlich ist. Vitamine können andererseits auch weniger stark gebunden sein und dann als Co-Katalysatoren wirken, beispielsweise als Gruppen, die sich leicht abspalten lassen und chemische Gruppen oder Elektronen zwischen den Molekülen transportieren. So transportiert beispielsweise Folsäure Methyl-, Formyl- und Methylengruppen in die Zelle. Obwohl ihre Unterstützung in Enzym-Substrat-Reaktionen wohl bekannt ist, sind auch ihre übrigen Eigenschaften für den Körper von großer Bedeutung.

Im Rahmen der vorliegenden Erfindung kommen als Vitamine Stoffe in Betracht, die ausgewählt sind aus der Gruppe bestehend aus
- Vitamin A (Retinol, Retinal, Betakarotin),
- Vitamin B₁ (Thiamin),
- Vitamin B₂ (Rioflavin),
- Vitamin B₃ (Niacin, Niacinamid),
- Vitamin B₅ (Panthothensäure),
- Vitamin B₆ (Pyridoxin, Pyridoxamin, Paridoxal),
- Vitamin B₇ (Biotin),
- Vitamin B₉ (Folsäure, Folinsäure),
- Vitamin B₁₂ (Cyanobalamin, Hydroxycobalmin, Methylcobalmin),
- Vitamin C (Ascorbinsäure),
- Vitamin D (Cholecalciferol),
- Vitamin E (Tocopherole, Tocotrienole) und
- Vitamin K (Phyllolchinon, Menachinon).

Die bevorzugten Vitamine sind neben der Ascorbinsäure die Gruppe der Tocopherole.

### Antioxidantien

In der Lebensmittelindustrie werden sowohl natürliche als auch künstliche Antioxidationsmittel verwendet. Natürliche und künstliche Antioxidantien unterscheiden sich in erster Linie dadurch, dass erstere natürlich in der Nahrung vorkommen und letztere künstlich hergestellt werden. So werden natürliche Antioxidationsmittel, so sie als Lebensmittelzusatzstoff eingesetzt werden sollen, beispielsweise aus Pflanzenölen gewonnen. Vitamin E - auch als Tocopherol bekannt - wird beispielsweise häufig aus Sojaöl hergestellt. Synthetische Antioxidantien wie das Propylgallat, das Octylgallat und das Dodecylgallat werden dagegen durch chemische Synthese gewonnen. Die Gallate können bei empfindlichen Personen Allergien auslösen. Weitere einsetzbare Antioxidantien in Zusammensetzungen der vorliegenden Erfindung sind: Schwefeldioxid, E 220 Sulfite Natriumsulfit, E 221 Natriumhydrogensulfit, E 222 Natriumdisulfit, E 223 Kaliumdisulfit, E 224 Kalziumsulfit, E 226 Kalziumhydrogensulfit, E 227 Kaliumhydrogensulfit, E 228 Milchsäure, E 270 Ascorbinsäure, E 300 Natrium-L-Ascorbat, E 301 Calcium-L-Ascorbat, E 302 Ascorbinsäureester, E 304 Tocopherol, E 306 Alpha-Tocopherol, E 307 Gamma-Tocopherol, E 308 Delta-Tocopherol, E 309 PropyIgallat, E 310 Octygallat, E 311 Dodecylgallat, E 312 Isoascorbinsäure, E 315 Natriumisoascorbat, E 316 tertiär-Butylhydrochinon (TBHQ), E 319 Butylhydroxianisol, E 320 Butylhydroxitoluol, E 321 Lecithin, E 322 Citronensäure, E 330 Salze der Zitronensäure (E 331 & E 332) Natriumzitrat, E 331 Kaliumzitrat, E 332 Calcium-Dinatrium-EDTA, E 385 Diphosphate, E 450 Dinatriumdiphosphat, E 450a Trinatriumdiphosphat, E 450b Tetranatriumdiphosphat, E 450c Dikaliumdiphosphat, E 450d Trekaliumdiphosphat, E 450e Dikalziumdiphosphat, E 450f Kalziumdihydrogendiphosphst, E 450g Triphosphate, E 451 Pentanatriumtriphosphat, E 451a Pentakaliumtriphosphat, E 451b Polyphosphat, E 452 Natriumpolyphosphat, E 452a Kaliumpolyphosphat, E 452b Natriumkalziumpolyphosphat, E 452c Kalziumpolyphosphat, E 452d Zinn-II-Chlorid, E 512.

### Aromastoffe

Die erfindungsgemäßen Zubereitungen können einen oder mehrere Aromastoffe enthalten. Typische Beispiele umfassen: Acetophenon, Allylcapronat, alpha-Ionon, betalonon, Anisaldehyd, Anisylacetat, Anisylformiat, Benzaldehyd, Benzothiazol, Benzylacetat, Benzylalkohol, Benzylbenzoat, beta-Ionon, Butylbutyrat, Butylcapronat, Butylidenphthalid, Carvon, Camphen, Caryophyllen, Cineol, Cinnamylacetat, Citral, Citronellol, Citronellal, Citronellylacetat, Cyclohexylacetat, Cymol, Damascon, Decalacton, Dihydrocumarin, Dimethylanthranilat, Dimethylanthranilat, Dodecalacton, Ethoxyethylacetat, Ethylbuttersäure, Ethylbutyrat, Ethylcaprinat, Ethylcapronat, Ethylcrotonat, Ethylfuraneol, Ethylguajakol, Ethylisobutyrat, Ethylisovalerianat, Ethyllactat, Ethylmethylbutyrat, Ethylpropionat, Eucalyptol, Eugenol, Ethylheptylat, 4-(p-Hydroxyphenyl)-2-butanon, gamma-Decalacton, Geraniol, Geranylacetat, Geranylacetat, Grapefruitaldehyd, Methyldihydrojasmonat (z.B. Hedion^{®}), Heliotropin, 2-Heptanon, 3-Heptanon, 4-Heptanon, trans-2-Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cis-3-Hexenylcapronat, trans-2-Hexenylcapronat, cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans-2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta-Undecalacton, gamma-Undecalacton, Valencen, Valeriansäure, Vanillin, Acetoin, Ethylvanillin, Ethylvanillinisobutyrat (= 3-Ethoxy-4-isobutyryloxybenzaldehyd), 2,5-Dimethyl-4-hydroxy-3(2H)-furanon und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalacton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-l-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, 2-Acetyl-l-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-Nonenal, 2-Undecenal, 12-Methyltridecanal, 1-Penten-3-on, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Zimtaldehyd, Zimtalkohol, Methylsalicylat, Isopulegol sowie (hier nicht explizit genannte) Stereoisomere, Enantiomere, Stellungsisomere, Diastereomere, cis/trans-Isomere bzw. Epimere dieser Substanzen.

### Geschmacksverstärker

Die Zubereitungen können des Weiteren zusätzliche Aromastoffe zum Verstärken von Geschmackseindrücken enthalten. Weiterhin können erfindungsgemäß bevorzugte Aromamischungen und Produkte auch Aromastoffe zur Maskierung von bitteren und/oder adstringierenden Geschmackseindrücken umfassen (Geschmackskorrigentien). Die (weiteren) Geschmackskorrigenzien werden z. B. aus der folgenden Liste ausgewählt: Nucleotide (z.B. Adenosin-5'-monophosphat, Cytidin-5'-monophosphat) oder deren pharmazeutisch akzeptable Salze, Lactisole, Natriumsalze (z.B. Natriumchlorid, Natriumlactat, Natriumcitrat, Natriumacetat, Natriumgluconoat), weitere Hydroxyflavanone (z.B. Eriodictyol, Homoeriodictyol oder deren Natriumsalze), insbesondere gemäß US 2002/0188019, Hydroxybenzoesäureamide nach DE 10 2004 041 496 (z.B. 2,4-Dihydroxybenzoesäurevanillylamid, 2,4-Dihydroxybenzoesäure-N-(4-hydroxy-3-methoxybenzyl)amid, 2,4,6-Trihydroxybenzoesäure-N-(4-hydroxy-3-methoxybenzyl)amid, 2-Hydroxy-benzoesäure-N-4-(hydroxy-3-methoxybenzyl)amid, 4-Hydroxybenzoesäure-N-(4-hydroxy-3-methoxybenzyl)amid, 2,4-Dihydroxybenzoesäure-N-(4-hydroxy-3-methoxyben-zyl)amid-Mono-natriumsalz, 2,4-Dihydroxybenzoesäure-N-2-(4-hydroxy-3-methoxyphenyl)-ethylamid, 2,4-Dihydroxybenzoesäure-N-(4-hydroxy-3-ethoxybenzyl)amid, 2,4-Dihydroxy-benzoesäure-N-(3,4-dihydroxybenzyl)amid und 2-Hydroxy-5-methoxy-N-[2-(4-hydroxy-3-methoxyphenyl)ethyl]amid (Aduncamid), 4-Hydroxybenzoesäurevanillylamid), bittermaskierende Hydroxydeoxybenzoine z.B. gemäß WO 2006/106023 (z.B. 2-(4-Hydroxy-3-methoxyphenyl)-1-(2,4,6-tri,hydroxyphenyl)ethanon, 1-(2,4-Dihydroxyphenyl)-2-(4-hydroxy-3-methoxyphenyl)ethanon, 1-(2-Hydroxy-4-methoxyphenyl)-2-(4-hydroxy-3-methoxy-phenyl)ethanon), Aminosäuren (z.B. gamma-Aminobuttersäure nach WO 2005/096841 zur Verminderung oder Maskierung eines unangenehmen Geschmackseindrucks wie Bitterkeit), Äpfelsäureglycoside nach WO 2006/003107, salzig schmeckende Mischungen gemäß PCT/EP 2006/067120 Diacetyltrimere gemäß WO 2006/058893, Gemische von Molkeproteinen mit Lecithinen und/oder bittermaskierende Substanzen wie Gingerdione gemäß WO 2007/003527.

Bevorzugte Aromastoffe sind solche, die einen süßen Geruchseindruck verursachen, wobei der oder die weiteren Aromastoffe, die einen süßen Geruchseindruck verursachen, bevorzugt ausgewählt sind aus der Gruppe bestehend aus: Vanillin, Ethylvanillin, Ethylvanillinisobutyrat (= 3 Ethoxy-4-isobutyryloxybenzaldehyd), Furaneol (2,5-Dimethyl-4-hydroxy-3(2H)-furanon) und Abkömmlinge (z.B. Homofuraneol, 2-Ethyl-4-hydroxy-5-methyl-3(2H)-furanon), Homofuronol (2-Ethyl-5-methyl-4-hydroxy-3(2H)-furanon und 5-Ethyl-2-methyl-4-hydroxy-3(2H)-furanon), Maltol und Abkömmlinge (z.B. Ethylmaltol), Cumarin und Abkömmlinge, gamma-Lactone (z.B. gamma-Undecalacton, gamma-Nonalacton), delta-Lactone (z.B. 4-Methyldeltalacton, Massoilacton, Deltadecalac-ton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenone, 3-Hydroxy-4,5-dimethyl-2(5H)-furanon, Fruchtester und Fruchtlactone (z.B. Essigsäure-n-butylester, Essigsäureisoamylester, Propionsäureethylester, Buttersäureethyl-ester, Buttersäure-n-butylester, Buttersäurei-soamylester, 3-Methyl-buttersäureethylester, n-Hexansäureethylester, n-Hexansäure-allylester, n-Hexansäure-n-butylester, n-Octansäureethylester, Ethyl-3-methyl-3-phenylglycidat, Ethyl-2-trans-4-cis-decadienoat), 4-(p-Hydroxyphenyl)-2-butanon, 1,1-Dimethoxy-2,2,5-trimethyl-4-hexan, 2,6-Dimethyl-5-hepten-l-al, 4-Hydroxyzimtsäure, 4-Methoxy-3-hydroxyzimtsäure, 3-Methoxy-4-hydroxyzimtsäure, 2-Hydroxyzimtsäure, 2,4-Dihydroxybenzoesäure, 3-Hydroxybenzoesäure, 3,4-Dihydroxybenzoesäure, Vanillinsäure, Homovanillinsäure, Vanillomandelsäure und Phenylacetaldehyd.

### Lebensmittelfarbstoffe

Lebensmittelfarbstoffe oder kurz Farbstoffe sind Lebensmittelzusatzstoffe zum Färben von Lebensmittel. Farbstoffe werden in die Gruppen der natürlichen Farbstoffe und synthetischen Farbstoffe unterteilt. Die naturidentischen Farbstoffe sind ebenfalls synthetischen Ursprungs. Die naturidentische Farbstoffe sind synthetische Nachbildungen von in der Natur vorkommenden, färbenden Substanzen. Geeignete Farbstoffe für den Einsatz in der vorliegenden Zusammensetzung sind ausgewählt aus: Kurkumin, E 100 Riboflavin, Lactoflavin, Laktoflavin, Vitamin B2, E 101 Tartrazin, E 102 Chinolingelb, E 104 Gelborange S, Gelborange RGL, E 110 Cochenille, Karminsäure, echtes Karmin, E 120 Azorubin, Carmoisin, E 122 Amaranth, E 123 Cochenillerot A, Ponceau 4 R, Victoriascharlach 4 R, E 124 Erythrosin, E 127 Allurarot AC, E 129 Patentblau V, E 131 Indigotin, Indigo-Karmin, E 132 Brillantblau FCF, Patentblau AE, Amidoblau AE, E 133 Chlorophylle, Chlorophylline, E 140 Kupferkomplexe der Chlorophylle, Kupfer-Chlorophyllin-Komple, E 141 Brillantsäuregrün, Grün S, E 142 Zuckerkulör, Zuckercouleur, E 150 a Sulfitlaugen-Zuckerkulör, E 150 b Ammoniak-Zuckerkulör, E 150 c Ammoniumsulfit-Zuckerkulör, E 150 d Brillantschwarz FCF, Brillantschwarz PN, Schwarz PN, E 151 Pflanzenkohle, E 153 Braun FK, E 154 Braun HT, E 155 Carotin, Karotin, E 160 a Annatto, Bixin, Norbixin, E 160 b Capsanthin, Capsorubin, E 160 c Lycopin, E 160 d Beta-apo-8'-Carotinal, Apocarotinal, Beta-Apocarotinal, E 160 e Beta-apo-8'-Carotinsäure-Ethylester (C30), Apocarotinester, Beta-Carotinsäureester, E 160 f Lutein, Xanthophyll, E 161 b Canthaxanthin, E 161 g Betanin, Betenrot, E 162 Anthocyane, E 163 Calciumcarbonat, E 170 Titandioxid, E 171 Eisenoxide, Eisenhydroxide, E 172 Aluminium, E 173 Silber, E 174 Gold, E 175 Litholrubin BK, Rubinpigment BK, E 180.

### GEWERBLICHE ANWENDBARKEIT

Ein weiterer Gegenstand der Erfindung betrifft die Verwendung der erfindungsgemäßen Proteinzubereitungen als Käseersatzstoff, speziell als Ersatzstoff für Schnittkäse.

### BEISPIELE

### BEISPIEL 1

1.000 kg Milch (8 °C) wurden mit Zitronensäure auf einen pH-Wert von 4,5 eingestellt und mit Lab versetzt. Die Mischung wurde in einen Schneckenextruder eingetragen, der von außen auf etwa 100 °C beheizt war und in dem ein Druck von etwa 200 bar herrschte. Unter diesen Bedingungen wurde die Milch beim Passieren des Extruders dickgelegt. Die beim Prozess angefallene Flüssigkeit wurde über eine Entspannungsstrecke ausgeschleust. Bei einem Durchsatz von etwa 500 kg/h wurden anschließend 800 kg einer brüchigen Proteinmasse erhalten, die eine Textur ähnlich Weißkäse aufwies.

### BEISPIEL 2

5.000 kg Milch (8 °C) wurden mit Zitronensäure auf einen pH-Wert von 4,5 eingestellt und mit Lab versetzt. Die Mischung wurde in einen Schneckenextruder eingetragen, der von außen auf etwa 150 °C beheizt war und in dem ein Druck von etwa 250 bar herrschte. Unter diesen Bedingungen wurde die Milch beim Passieren des Extruders dickgelegt. Die beim Prozess angefallene Flüssigkeit wurde in das Produkt eingeknetet. Bei einem Durchsatz von etwa 1.000 kg/h wurden anschließend 4.800 kg einer annähernd festen Proteinmasse erhalten, die eine Textur ähnlich Schnittkäse aufwies.

### BEISPIEL 3

1.000 kg Milchkonzentrat wurden mit Lab versetzt. Die Mischung wurde zusammen mit 20 kg Zitronensäure in einen Schneckenextruder eingetragen, der von außen auf etwa 100 °C beheizt war und in dem ein Druck von etwa 200 bar herrschte. Unter diesen Bedingungen wurde die Milch beim Passieren des Extruders dickgelegt. Die beim Prozess angefallene Flüssigkeit wurde über eine Entspannungsstrecke ausgeschleust. Bei einem Durchsatz von etwa 500 kg/h wurden anschließend 800 kg einer brüchigen Proteinmasse erhalten, die eine Textur ähnlich Weißkäse aufwies.

## Patentansprüche

1. Feste Proteinzubereitung, dadurch erhältlich, dass man
(a) Proteine aus natürlichen Quellen in einen Schneckenextruder einspeist,
(b) der Masse während des Extrusionsvorgangs ein Denaturierungsmittel zusetzt, und
(c) die extrudierte und denaturierte Masse nach Verlassen des Extruders ausformt.

2. Verfahren zur Herstellung einer Proteinzubereitung, bei dem man
(a) Proteine aus natürlichen Quellen in einen Schneckenextruder einspeist,
(b) der Masse während des Extrusionsvorgangs ein Denaturierungsmittel zusetzt, und
(c) die extrudierte und denaturierte Masse nach Verlassen des Extruders ausformt.

3. Verfahren nach Anspruch 2, **dadurch gekennzeichnet, dass** man Proteine einsetzt, die ausgewählt sind aus der Gruppe der Pflanzenproteine und Milchproteine sowie deren Gemischen.

4. Verfahren nach Anspruch 3, **dadurch gekennzeichnet, dass** man Weizenproteine, Erbsenproteine oder Kartoffelproteinen.

5. Verfahren nach Anspruch 3, **dadurch gekennzeichnet, dass** man Milchproteine und/oder Molkenproteine einsetzt,

6. Verfahren nach mindestens einem der Ansprüche 1 bis 5, **dadurch gekennzeichnet, dass** man Proteine mit einer Trockenmasse im Bereich von etwa 15 bis etwa 60 Gew.-% einsetzt.

7. Verfahren nach mindestens einem der Ansprüche 2 bis 6, **dadurch gekennzeichnet, dass** man Proteine einsetzt, die als weitere Bestandteile Casein und/oder Lactose enthalten.

8. Verfahren nach mindestens einem der Ansprüche 2 bis 7, **dadurch gekennzeichnet, dass** man die Extrusion in einem Doppelschneckenextruder durchführt.

9. Verfahren nach mindestens einem der Ansprüche 2 bis 8, **dadurch gekennzeichnet, dass** man die Extrusion bei einer Temperatur im Bereich von etwa 50 bis etwa 150 °C-bezogen auf die Manteltemperatur des Extruders - durchführt.

10. Verfahren nach mindestens einem der Ansprüche 2 bis 9, **dadurch gekennzeichnet, dass** man die Extrusion bei einem Druck von etwa 1 bis etwa 300 bar durchführt.

11. Verfahren nach mindestens einem der Ansprüche 2 bis 10, **dadurch gekennzeichnet, dass** man die Extrusion mit einem Durchsatz von etwa 200 bis etwa 7000 kg/h durchführt.

12. Verfahren nach mindestens einem der Ansprüche 2 bis 11, **dadurch gekennzeichnet, dass** man der Masse während der Extrusion als Denaturierungsmittel eine Lebensmittelsäurequelle zusetzt, die ausgewählt ist aus der Gruppe, die gebildet wird von Zitronensäure, Milchsäure oder Glucon-delta-Lacton sowie deren Gemischen.

13. Verfahren nach mindestens einem der Ansprüche 2 bis 12, **dadurch gekennzeichnet, dass** man der Masse während der Extrusion als Denaturierungsmittel Lab zusetzt.

14. Verfahren nach mindestens einem der Ansprüche 2 bis 13, **dadurch gekennzeichnet, dass** man der Masse während der Extrusion Starterkulturen, Probiotische Mikroorganismen, Prebiotische Stoffe, Emulgatoren, Verdickungsmittel, Aromastoffe, Geschmacksverstärker, Salze, Kräuter, Vitamine, Antioxidantien, Lebensmittelfarbstoffe und dergleichen zusetzt.

15. Verwendung der festen Proteinzubereitung nach Anspruch 1 als Käseersatzstoff.
